Europäisches Patentamt

(19) European Patent Office

Office européen des brevets

(11) Numéro de publication: **0 055 146
B1**

(12) **FASCICULE DE BREVET EUROPEEN**

(45) Date de publication du fascicule du brevet:
14.08.85

(51) Int. Cl.⁴: **G 05 D 13/62**

(21) Numéro de dépôt: **81401714.1**

(22) Date de dépôt: **27.10.81**

(54) Circuit d'asservissement numérique en fonction de la fréquence.

(30) Priorité: **12.12.80 FR 8026416**

(43) Date de publication de la demande:
**30.06.82 Bulletin 82/26**

(45) Mention de la délivrance du brevet:
**14.08.85 Bulletin 85/33**

(84) Etats contractants désignés:
**DE FR GB IT NL**

(56) Documents cités:
**FR - A - 2 131 342
FR - A - 2 339 202
FR - A - 2 436 434
US - A - 3 546 553
US - A - 4 152 631**

**Winfried Opplet "Kleines Handbuch technischer
Regelvorgänge" Verlag Chemie GmbH, 1972, pages 695,
696**

(73) Titulaire: **SOCIETE POUR L'ETUDE ET LA FABRICATION
DE CIRCUITS INTEGRES SPECIAUX - E.F.C.I.S.,
17, avenue des Martyrs, F-38100 Grenoble (FR)**

(72) Inventeur: **Prunier, Jacques, THOMSON-CSF
SCPI 173, bld Haussmann, F-75360 Paris Cedex 08 (FR)**
Inventeur: **Roussel, Bruno, THOMSON-CSF
SCPI 173, bld Haussmann, F-75360 Paris Cedex 08 (FR)**

(74) Mandataire: **de Beaumont, Michel et al, THOMSON-CSF
SCPI 173, Bld Haussmann, F-75379 Paris Cedex 08 (FR)**

## Description

La présente invention concerne un circuit d'asservissement apte à établir une information numérique variable en fonction d'une différence entre une fréquence de mesure et une fréquence de consigne.

Ce circuit est destiné à être incorporé à une boucle de régulation dans laquelle le paramètre de régulation est une fréquence et dans laquelle on veut autant que possible que tous les éléments soient numériques et à réglage numérique.

En particulier, on a cherché à réaliser une boucle de régulation numérique de la vitesse d'un moteur, la régulation se faisant en détectant la vitesse par un capteur tachymétrique délivrant une fréquence proportionelle à la vitesse, en comparant cette fréquence à une fréquence de consigne, et en traitant l'écart de fréquences de manière à produire un signal de valeur numérique fonction de cet écart et agissant sur le réglage de la puissance appliquée au moteur (par une modification d'angle de phase d'attaque d'un triac ou de rapport cyclique de conduction d'un transistor par exemple).

La présente invention s'intéresse plus spécialement à la partie d'asservissement permettant de produire une valeur numérique de sortie (commandant directement un réglage de puissance) en fonction d'un écart de fréquences.

Le circuit destiné à réaliser cette fonction ne peut être constitué comme la plupart des circuits de régulation par une succession d'éléments réalisant simplement une combinaison d'une fonction proportionelle, d'une fonction intégrale, et d'une fonction dérivée de l'écart de fréquences. En effet, c'est là la solution qui viendrait tout naturellement à l'esprit si la grandeur d'entrée était un écart de tensions par exemple. Au contraire, il s'agit là d'un écart de fréquences.

On peut alors effectuer la transposition en calculant de manière numérique une proportionnelle, une intégrale et une dérivée de l'écart de fréquences, mais, comme les coefficients de proportionnalité doivent être variables, on aboutit vite à une grande complexité de circuits. Le livre de Winfried Opplet «Kleines Handbuch technischer Regelvorgänge» édité en 1972 par Verlag Chemie GmbH explique cette notion de régulation numériques aux pages 695–696 en proposant des circuits incorporant des intégrateurs numériques, différentiateurs numérique et des limiteurs.

Une autre solution venant à l'esprit serait de convertir les fréquences en tension, et de faire la régulation en fonction d'un écart de tension. Mais, cette solution présente les inconvénients des conversions numériques/analogiques qu'on veut éviter dans l'ensemble de la boucle en conservant une régulation numérique d'un bout à l'autre.

Pour réaliser le circuit d'asservissement, la présente invention propose une combinaison d'éléments qui, sans constituer effectivement une régulation à fonction proportionnelle intégrale et dérivée et avec limitation du type suggéré par le livre de Winfried Opplet, en présente pourtant les caractères essentiels avec l'avantage d'une grande simplicité de structure.

Le circuit d'asservissement selon l'invention, apte à produire une valeur numérique fonction d'une différence entre une fréquence de mesure et une fréquence de consigne, en vue notamment de la commande numérique de la vitesse d'un moteur, comporte en combinaison:

– un cricuit d'élaboration fournissant ladite fréquence de consigne,
– un capteur tachymétrique fournissant ladite fréquence de mesure,
– un compteur-décompteur recevant sur une entrée de comptage ladite fréquence de consigne et sur une entrée de décomptage ladite fréquence de mesure, le contenu dudit compteur-décompteur représentant, à un instant donné, l'intégrale temporelle de la différence desdites deux fréquences,
– un comparateur de périodes recevant lesdites deux fréquences et fournissant à sa sortie un signal à trois états dont les signes (positif, négatif ou nul) correspondent respectivement à:
$f_c-f_x$ positif, $f_c-f_x$ négatif ou $f_c-f_x$ nul,
– un additionneur-combinateur logique recevant lesdits signaux de sortie dudit compteur-décompteur et dudit comparateur de périodes et fournissant à sa sortie une valeur numérique qui est une fonction du type $K_1x$ (le contenu du compteur-décompteur) $+K_2x$ le signe du signal de sortie du comparteur de périodes,
– un limiteur numérique placé à la sortie dudit additionneur-combinateur logique et limitant la valeur du signal de sortie de celui-ci à une valeur inférieure minimale et une valeur supérieure maximale; la valeur numérique du signal en sortie de l'additionneur-combinateur, limitée par le limiteur, constituant le signal de commande numérique de sortie du circuit d'asservissement, et
– une commande de puissance numérique recevant ledit signal de sortie du limiteur et commandant en conformité avec ce dernier signal la vitesse du moteur.

Ce circuit est relativement simple et permet un asservissement efficace en fréquence, avec une bonne précision grâce à la fonction intégrale réalisée par le compteur-décompteur, une rapidité de réponse élevée grâce au comparateur, et un bon comportement dans les régimes transitoires grâce au limiteur qui agit comme une butée lors des variations trop brusques de fréquence de mesure ou de consigne.

De préférence, les valeurs minimale et maximale du limiteur sont modifiable par action sur une entrée appropriée du limiteur, le réglage étant fait en fonction de la fréquence de consigne. En pratique, deux groupes de valeurs limites seulement peuvent être prévus, l'un correspondant à des fréquences de consigne élevées, l'autre correspondant à des fréquences de consigne basses.

Pour assurer un bon fonctionnement du compteur-décompteur, on prévoit un organe de synchronisation recevant la fréquence de mesure et un multiple de la fréquence de consigne pour synchroniser la fréquence de mesure sur ce multiple en amont du compteur-décompteur.

Les coefficients K1 et K2 de l'asservissement sont réglables numériquement par action sur l'additionneur logique pour modifier la réponse de l'asservissement.

D'autres caractéristiques et avantages de l'invention apparaîtront à la lecture de la description détaillée qui suit et qui est faite en référence aux dessins annexés dans lesquels:

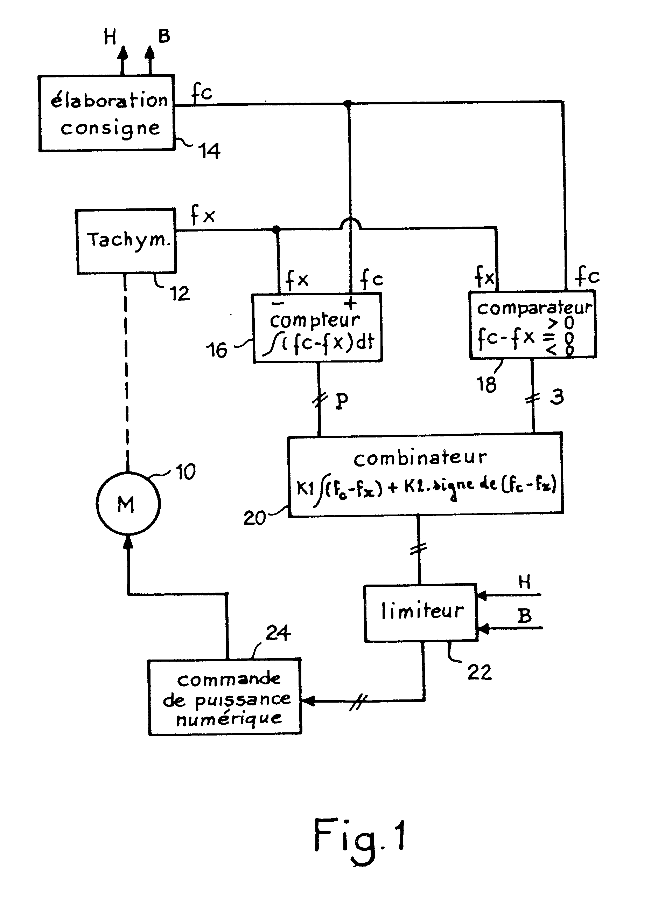

– la figure 1 représente un schéma général d'une boucle de régulation dans laquelle le circuit selon l'invention est utilisé;
– la figure 2 représente un schéma plus détaillé du circuit selon l'invention.

Pour réguler la vitesse d'un moteur électrique 10, on utilise un asservissement en fréquence à partir d'un capteur tachymètrique 12 qui élabore une fréquence fx directement proportionnelle à la vitesse du moteur et à partir d'un circuit 14 élaborant une fréquence de cosigne fc représentant la valeur théorique de vitesse que doit atteindre le moteur 10. Le circuit 14 est par exemple incorporé à un programmateur de machine et il délivre une fréquence de consigne fc qui est fonction du travail à accomplir par la machine.

L'écart entre les fréquences de mesure et de consigne fx et fc est le paramètre de régulation de l'asservissement.

Cet écart de fréquence fc – fx est traité directement sous forme numérique, sans conversion fréquence-tension, pour établir une valeur numérique de réglage d'un circuit de commande numérique de puissance du moteur 10. Par exemple, le moteur 10 est alimenté à travers un transistor de puissance et le réglage numérique agit sur le rapport cyclique de conduction du transistor. Le moteur peut aussi être alimenté à travers un triac, et le réglage numérique agit alors sur l'angle de phase de conduction du triac.

Le circuit d'asservissement proprement dit comprend donc un compteur-décompteur 16 qui reçoit sur une entrée de comptage la fréquence de consigne fc et sur une entrée de décomptage, la fréquence de mesure fx; le contenu du compteur représente donc, à un instant donné l'intégrale temporelle de la différence des fréquences fc et fx.

Le circuit comprend également un comparateur de fréquence 18 qui reçoit sur une entrée la fréquence fx et sur l'autre la fréquence fc, et qui établit un signal indiquant si la différence des fréquences est positive, négative, ou nulle. En réalité, le comparateur 18 compare les périodes respectives de fx et fc; il possède trois sorties correspondant respectivement à fc - fx positif, fc - fx négatif, ou fc - fx nul. On peut s'inspirer du comparateur à hystérésis dans le brevet FR-A-2 436 434, en établissant une sortie supplémentaire indiquant l'égalité des fréquences d'entrées.

Les sorties du comparateur 18, et celles du compteur 16, sont connectées à un circuit d'addition logique 20, qui réalise une combinaison des signaux numériques provenant du compteur et des signaux numériques provenant du comparateur, combinaison ayant la forme:

$$K_1 (fc-fx)\ dt + K_2\ \text{signe de } (fc - fx)$$

Dans cette combinaison, les coefficients $K_1$ et $K_2$ sont des valeurs numériques réglables, et le signal de sortie de l'additionneur logique 20 est un signal numérique représentant la somme d'une fonction intégrale de l'écart des fréquences d'entrée et d'un nombre dépendant essentiellement du signe de l'écart des fréquences.

Le signal numérique de sortie de l'additionneur logique 20 est appliqué à un limiteur 22 qui écrête par valeur supérieure et par valeur inférieure le signal de manière à le conserver dans un intervalle donné. Cette fonction de limitation prend son sens lors des régimes transitoires où on ne veut pas qu'un écart de fréquence variant brusquement entraîne une saturation brutale de l'asservissement. Le signal de sortie limité par le limiteur 22 est appliqué à l'organe de commande de puissance 24 du moteur 10.

Les valeurs limites déterminées par le limiteur 22 sont en principe fixes mais peuvent être modifiées par une commande appropriée. Dans l'exemple décrit plus précisément, on a prévu deux entrées de commande H,B qui proviennent du circuit d'élaboration de consigne 14 et qui permettent de choisir deux couples de valeurs limites différents selon que la fréquence de consigne est grande ou fabile: l'entrée H permet de choisir l'un des couples de valeurs lorsque la fréquence de consigne est élevée; l'entrée B permet de choisir l'autre couple de valeurs lorsque la fréquence de consigne est basse.

On peut noter que le compteur-décompteur doit avoir une capacité suffisante pour absorber toute la dynamique possible de l'écart de fréquence fc - fx intégré pendant la durée de réaction de l'asservissement à une variation de cet écart. Il faut en effet, que lorsqu'il y a un écart de fréquence d'amplitude déterminée, cet écart ait le temps de revenir à zéro avant que la capacité du compteur, qui intègre les impulsions venant de cet écart de fréquences, ne soit dépassée. Si cette capacité était dépassée, on aurait en effet un phénomène de fausse consigne apparente.

En ce qui concerne le comparateur, on verra que pour avoir plus de résolution, on effectue la comparaison de fréquences à partir de la fréquence de mesure fx et d'un multiple de la fréquence de consigne fc.

Les coefficients K1 et K2 de la fonction de combinaison réalisée par l'additionneur logique 20 sont des coefficients du type $2^P$, P étant un entier positif ou négatif. La sortie de l'additionneur logique 20 est une sortie à q chiffres binaires, de même que la sortie du limiteur 22; toutefois on peut utiliser seulement les chiffres les plus significatifs de cette sortie pour régler la puissance transmise au moteur 10.

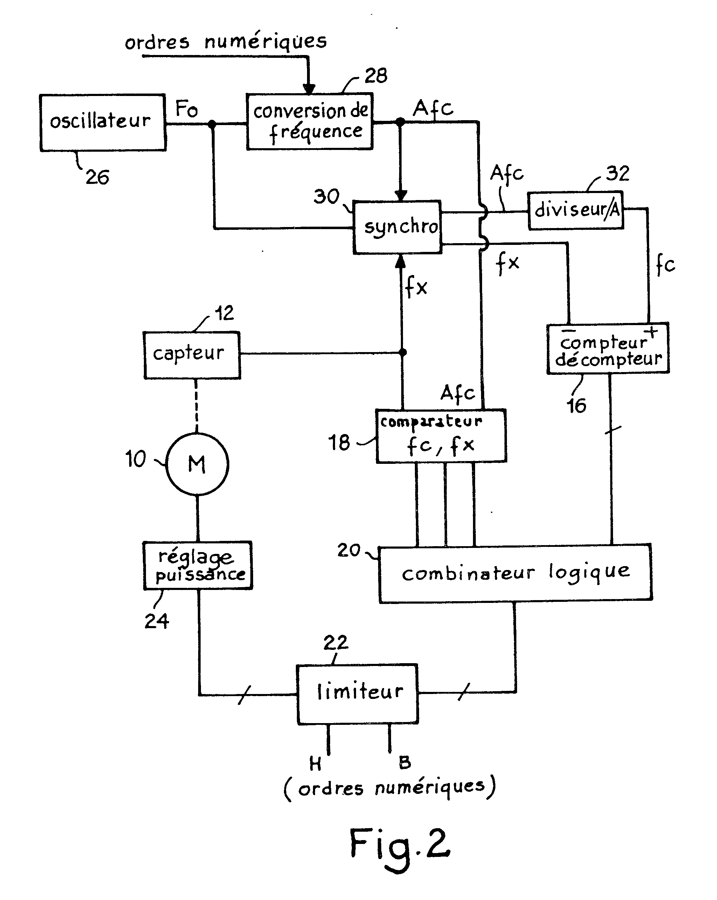

La figure 2 montre selon un schéma un peu plus détaillé la manière dont sont utilisées les fréquences fx et fc pour établir la fonction d'asservissement souhaitée.

Tout d'abord un oscillateur 26 sert à établir une fréquence de référence FO à partir de laquelle est engendrée la fréquence de consigne fc.

Pour cela, un convertisseur de fréquence reçoit la fréquence FO d'une part et des ordres sous forme numérique d'autre part; ce convertisseur 28 produit une fréquence proportionnelle à la fréquence de base FO, le coefficient de proportionalité étant choisi en fonction des ordres numériques reçus. La fréquence de sortie 28 du convertisseur est une fréquence de consigne, ou plus exactement c'est un multiple de la fréquence de consigne proprement dite, c'est-à-dire celle qui représente la vitesse à atteindre par le moteur 10. La fréquence de sortie du convertisseur 28 peut s'exprimer sous la forme Afc et elle sera divisée ultérieurement par le coefficient A pour produire la fréquence fc comparable à la fréquence de mesure fx.

Les fréquences fx et Afc sont synchronisées dans un circuit de synchronisation 30 afin de faciliter ensuite le comptage et le décomptage dans le compteur 16 (pour éviter notamment des coincidences d'impulsions de comptage et de décomptage) sur les entrées du compteur 16). Cette synchronisation est facile puisque fx est une fréquence largement inférieure à Afc.

Après synchronisation, la fréquence Afc est divisée dans le diviseur 32 et est amenée à l'entrée de comptage du compteur 16, alors que la fréquence fx est amenée à l'entrée de décomptage.

D'autre part, le comparateur de fréquence 18, qui fournit à sa sortie une information sur le signe de fc - fx, est en réalité un comparateur de périodes, et il reçoit non pas fx et fc mais fx et Afc pour avoir plus de résolution; la comparaison s'effectue par comptage du nombre d'impulsions Afc dans une période de fx.

On a ainsi décrit un circuit d'asservissement entièrement numérique qui ne nécessite aucune conversion en tension des fréquences servant de paramètre de régulation; cette réalisation entièrement numérique permet non seulement d'obtenir une stabilité à long terme du circuit, mais aussi d'avoir une possibilité de dosage numérique des gains des différentes composantes de l'asservissement, ainsi qu'une possibilité de programmation des consignes de fréquence (dans une mémoire morte programmable).

## Revendications

1. Circuit d'asservissement apte à produire une valeur numérique fonction d'une différence entre une fréquence de mesure ($f_x$) et une fréquence de consigne ($f_c$) en vue notamment de la commande numérique de la vitesse d'un moteur (10), ledit circuit d'asservissement comprenant en combinaison:

– un circuit d'élaboration (14) fournissant ladite fréquence de consigne ($f_c$),
– un capteur tachymétrique (22) fournissant ladite fréquence de mesure ($f_x$),
– un compteur-décompteur (16) recevant sur une entrée de comptage ladite fréquence de consigne ($f_c$) et sur une entrée de décomptage ladite fréquence de mesure ($f_x$), le contenu dudit compteur-décompteur (16) représentant, à un instant donné, l'intégrale temporelle de la différence ($f_c$-$f_x$) desdites deux fréquences,
– un comparateur de périodes (18) recevant lesdites deux fréquences et fournissant à sa sortie un signal à trois états dont les signes (positif, négatif ou nul) correspondent respectivement à: $f_c$-$f_x$ positif, $f_c$-$f_x$ négatif ou $f_c$-$f_x$ nul,
– un additionneur-combinateur logique (20) recevant lesdits signaux de sortie dudit compteur-décompteur (16) et dudit comparateur de périodes (18) et fournissant à sa sortie une valeur numérique qui est une fonction du type $K_1x$ (le contenu du compteur-décompteur (16) +$K_2x$ le signe du signal de sortie du comparateur de périodes (18),
– un limiteur numérique (22) placé à la sortie dudit additionneur-combinateur logique (20) et limitant la valeur du signal de sortie de celui-ci à une valeur inférieure minimale (B) et une valeur supérieure maximale (H); la valeur numérique du signal en sortie de l'additionneur-combinateur (20), limitée par le limiteur (22), constituant le signal de commande numérique de sortie du circuit d'asservissement, et
– une commande de puissance numérique (24) recevant ledit signal de sortie du limiteur (22) et commandant en conformité avec ce dernier signal la vitesse du moteur (10).

2. Circuit d'asservissement selon la revendication 1, dans lequel les valeurs minimale (B) et maximale (H) du limiteur (22) sont modifiables par l'action sur une entrée appropriée (B, H) du limiteur (22) de deux signaux (B, H) élaborés en fonction de la fréquence de consigne ($f_c$) par ledit circuit d'élaboration (14) de ladite fréquence de consigne.

3. Circuit d'asservissement selon l'une des revendications 1 et 2, dans lequel il est prévu on organe de synchronisation (30) recevant la fréquence de mesure ($f_x$) et un multiple de la fréquence de consigne ($f_c$) pour synchroniser la fréquence de mesure ($f_x$) sur ce multiple en amont du compteur-décompteur (16) et du comparateur de périodes (18).

## Patentansprüche

1. Regelkreis, der einen Digitalwert abhängig von der Differenz zwischen einer Messfrequenz ($f_x$) und einer Sollfrequenz ($f_c$) erzeugen kann, insbesondere zur digitalen Geschwindigkeitssteuerung eines Motors (10), wobei der Regelkreis in Kombination enthält:
– einen Arbeitsschaltkreis (14), der die Sollfrequenz ($f_c$) liefert,

– eine tachimetrische Sonde (22), die die Messfrequenz ($f_x$) liefert,
– einen Vorwärts-Rückwärtszähler (16), an dessen Vorwärtszähleingang die Sollfrequenz ($f_c$) und an dessen Rückwärtszähleingang die Messfrequenz ($f_x$) angelegt ist, wobei der Inhalt dieses Vorwärts-Rückwärtszählers (16) in einem gegebenen Zeitpunkt das Zeitintegral der Differenz ($f_c$-$f_x$) der beiden Frequenzen darstellt,
– einen Periodenkomparator (18), dem die beiden Frequenzen zugeführt werden und der am Ausgang ein Signal gemäss einem von drei Zuständen liefert, deren Vorzeichen (positiv, negativ oder null) einer positiven Differenz der Frequenzen, einer negativen Differenz der Frequenzen $f_c$ and $f_x$ oder der Differenz null entspricht,
– einen logischen Addierer-Kombinierer (20), dem die Ausgangssignale des Vorwärts-Rückwärtszählers (16) und des Periodenkomparators (18) zugeführt werden und der am Ausgang einen Digitalwert liefert, der eine Funktion vom Typ $K_1$ mal dem Inhalt des Vorwärts-Rückwärtszählers (16) plus $K_2$ mal dem Vorzeichen des Ausgangssignals des Periodenkomparators (18) ist,
– einen digitalen Begrenzer (22), der an den Ausgang des logischen Addierers-Kombinierers (20) angeschlossen ist und den Wert von dessen Ausgangssignal zwischen einem unteren Minimalwert (D) und einem oberen Maximalwert (H) begrenzt, wobei der Digitalwert des Ausgangssignals des Addierers-Kombinierers (20), begrenzt durch den Begrenzer (22), das digitale Ausgangsstellsignal des Regelkreises bildet, und
– einen digitalen Leistungssteuerkreis (24), dem das Ausgangssignal des Begrenzers (22) zugeführt wird und der die Geschwindigkeit des Motors (10) entsprechend diesem Signal steuert.

2. Regelkreis nach Anspruch 1, in dem der Minimalwert (B) und der Maximalwert (H) des Begrenzers (22) durch Steuerung über einen geeigneten Eingang (B, H) des Begrenzers (22) mithilfe zweier Signale (B, H) verändert werden können, die abhängig von der Sollfrequenz ($f_c$) vom Schaltkreis (14) zur Erarbeitung der Sollfrequenz geliefert werden.

3. Regelkreis nach einem der Ansprüche 1 und 2, in dem ein Synchronisationsorgan (30) vorgesehen ist, das die Messfrequenz ($f_x$) und ein Vielfaches der Sollfrequenz ($f_c$) zugeführt erhält, um die Messfrequenz ($f_x$) auf dieses Vielfache vor dem Vorwärts-Rückwärtszähler (16) und dem Periodenkomparator (18) zu synchronisieren.

**Claims**

1. A control circuit which is able to produce a digital value corresponding to the difference between a measuring frequency ($f_x$) and a set frequency ($f_c$), especially in view of the digital control of the speed of a motor (10), this control circuit comprising in combination:

– an elaboration circuit (14) furnishing said set frequency ($f_c$),
– a tachometrique probe (22) delivering said measuring frequency ($f_x$),
– an up- and down-counter (16), an upcounting input of which receives said set frequency ($f_c$), whereas a downcounting input receives said measuring frequency ($f_x$), the content of said counter (16) representing at a given moment the time integral of the difference ($f_c$-$f_x$) of said frequencies,
– a period comparator (18) receiving said two frequencies and delivering at its output one of three states (positive, negative or zero) corresponding respectively to a positive difference $f_c$-$f_x$, a negative difference $f_c$-$f_x$ or a difference zero,
– a logical adder-combinator (20) receiving said output signals of said counter (16) and of said period comparator (18) and furnishing at its output a digital value which constitutes a function of the type $K_1$ multiplied with the content of the counter (16) plus $K_2$ multiplied with the sign of the output signal of the period comparator (18),
– a digital limiting device (22) branched at the output of said logical adder-combinator (20) and restricting the value of the output signal of the latter to a value between a lower minimum value (B) and an upper maximum value (H), the digital value of the output signal of the adder-combinator (20) limited by the limiting device (22) constituting the digital control output signal of the control circuit, and
– a digital power control (24) receiving said output signal from the limiting device (22) and controlling the speed of the motor (10) in accordance with this latter signal.

2. A control circuit according to claim 1, in which the minimum value (B) and the maximum value (H) of the limiting device (22) can be modified by acting on an appropriate input (B, H) of the limiting device (22) by two signals (B, H) produced in accordance with the set frequency ($f_c$) by said circuit (14) which elaborates the set frequency.

3. A control circuit according to one of the claims 1 and 2, in which a synchronization device (30) is provided which receives the measuring frequency ($f_x$) and a multiple value of the set frequency ($f_c$) in order to synchronize the measuring frequency ($f_x$) on said multiple upstream of the up- and down-counter (16) and of the period comparator (18).

Fig.1

Fig.2